Europäisches Patentamt

European Patent Office

Office européen des brevets

(11) Publication number: **0 254 233 B1**

## EUROPEAN PATENT SPECIFICATION

(45) Date of publication of patent specification: **08.04.92**  (51) Int. Cl.⁵: **A63B 21/00**, F16B 21/10

(21) Application number: **87110416.2**

(22) Date of filing: **17.07.87**

(54) **Quick release collar.**

(30) Priority: **21.07.86 US 888516**

(43) Date of publication of application:
**27.01.88 Bulletin 88/04**

(45) Publication of the grant of the patent:
**08.04.92 Bulletin 92/15**

(84) Designated Contracting States:
**DE ES FR GB IT SE**

(56) References cited:
**DE-A- 3 401 391**
**GB-A- 1 379 643**
**US-A- 4 290 617**
**US-A- 4 395 051**
**US-A- 4 453 449**

(73) Proprietor: **Mueller, Warren A.**

**Voluntown, Connecticut(US)**

(72) Inventor: **Lee, Scott H.**
**RR2, Box 10 Church Street**
**Putnam Connecticut 06260(US)**

(74) Representative: **Patentanwälte Grünecker,**
**Kinkeldey, Stockmair & Partner**
**Maximilianstrasse 58**
**W-8000 München 22(DE)**

Rank Xerox (UK) Business Services

## Description

Field of the Invention

This invention relates to a quick release collar for a bar and, more particularly, to a quick release collar which is intended for, but not limited to, retaining weight plates on a weight lifting barbell.

Background of the Invention

The weights used by bodybuilders and weight lifters typically include a bar or shaft of several feet in length with a rotatable, knurled sleeve slipped over the central portion of the bar and with fixed stops at the opposite ends of the sleeve. Disc-like weight plates with central openings are loaded onto opposite ends of the bar and are secured in position against the stops by a pair of collars. Various sizes and numbers of weight plates are used to obtain a desired total weight. The plates are changed frequently because different weights are required during a succession of lifts or for different exercises or for different individuals.

Because the weight plates are changed frequently during use, the collars which hold them in position on the bar must be easily put on and taken off, preferably without the use of any tools. On the other hand, the collars must hold the weight plates securely in position because accidental slipping or dropping of the weight plates can result in personal injury and property damage.

The most commonly used collar for weight lifting includes a bushing with a bolt or screw which passes through a threaded hole and frictionally bears against the bar. The collar is secured in place by tightening the bolt against the bar. The bolt can be tightened with a tool or may have an L-shaped extension for manual tightening. Collars of this type have a number of disadvantages. The bolts frequently loosen, allowing the weight plates to slip on the bar or to fall off the bar. The bolts are difficult and inconvenient to tighten in a secure manner. In addition, when the bolts are fully tightened, they often dig into and damage the bar. Other prior art collars include a two-piece bushing with bolts on opposite sides of the bar, similar to a pipe clamp. These collars don't damage the bar. However, the inconvenience of tightening bolts remains. With collars using the friction of a manually-tightened bolt, the clamping force depends on the extent to which the bolt is tightened and may be insufficient.

British Patent Application No. 2,151,493A by Marcy Gymnasium Equipment Co., published July 24, 1985, discloses a weight clamping arrangement for a barbell wherein locking ball members are engaged in grooves in the bar. Quick release mechanisms are also disclosed in U.S. Patent Nos. 4,395,051 to Tanamura and 4,453,449 to Holman.

In the first of these documents the collars comprise a collar body including a cylindrical shell with an axial passage for the bar, grip means on the outer surface of the shell, a first flange axially spaced from the grip means on the outer surface of the shelf and a plurality of radial openings in the shell. A radially moveable ball is located in each of the openings in the shell. The quick release collar further includes a collar sleeve positioned outside and coaxial with the collar body which defines a space between the collar sleeve and the collar body. The sleeve includes a second flange extending radially inward to the collar body between the grip means and the first flange.

A tension ring is rigidly attached to the collar sleeve in the space between the sleeve and the collar body, and a spring is positioned between the first flange and the second flange. The sleeve and the tension ring are axially slidable with respect to the collar body between the locked position and an unlocked position. The tension ring has a tapered inner surface portion adjacent to the moveable balls. The inner surface portion is tapered to provide a relatively small diameter adjacent to the moveable balls in the lock position and relatively large diameter adjacent to the moveable balls in the unlocked position, such that the radial positions of the moveable balls depend on the axial position of the tension ring. The spring biases the sleeve and the tension ring axially towards the lock position so that the tension ring cams the moveable balls inwardly into frictional engagement with the bar. The grip means and the collar sleeve are manually spreadable to compress the spring and to move the tension ring axially towards the unlocked position so that the boards move outwardly.

Quick release collars have been described above in connection with weight lifting barbells. However, quick release collars have a wide variety of applications where quick release and secure holding with a moderate amount of force are required.

In GB-A-1 379 643 a chuck is disclosed for a climbing jack. A plurality of rollers are adapted to wedge between a rod to be climbed and a tapered surface of a housing. Further, a spring is positioned within the housing by a retaining ring and normally biases a roller holder and hence the rollers. Examples of further applications are in tire changers used in service stations, spare tire retention devices for automobiles, retention of wheels on toys, wagons and like, and for adjustable telescoping devices such as projection stream, drafting tables and beach umbrellas.

It is a general object of the present invention to provide a novel quick release collar for use on a bar or shaft. It is a further object of the present invention to provide a quick release collar which is easily and manually removeable without tools and without turning the collar on the bar.

It is a further object of the present invention to provide a quick release collar which stays securely in position on a bar without damaging the bar.

## Summary of the Invention

According to the present invention, these and other objects and advantages are achieved in a quick release collar for mounting on a bar as described in US Patent No. 4,395,051 whereby this collar is characterized by said tapered inner surface being located on an end portion of said tension ring, which end portion is spaced radially inwardly from the sleeve.

In contrast to the tapered surface portions of the collar sleeves this tapered surface is not attached to the collar sleeve and therefore accomodates outward radial deflection of the tapered portion of the tension ring and thereby provides a resiliency which avoids damage to the bar surface, balls and tapered surfaces.

## Brief Description of the Drawings

For a better understanding of the present invention, together with other and further objects, advantages and capabilities thereof, reference may be had to the accompanying drawings which are incorporated herein by reference and in which:

FIG. 1 illustrates the components of a barbell using a quick release collar of the present invention;

FIG. 2 is a cross-sectional view of the quick release collar of the present invention in the locked position;

FIG. 3 is an end view of the quick release collar of the present invention in the locked position; and

FIG. 4 is a cross-sectional view of the quick release collar of the present invention in the unlocked position.

## Detailed Description of the Invention

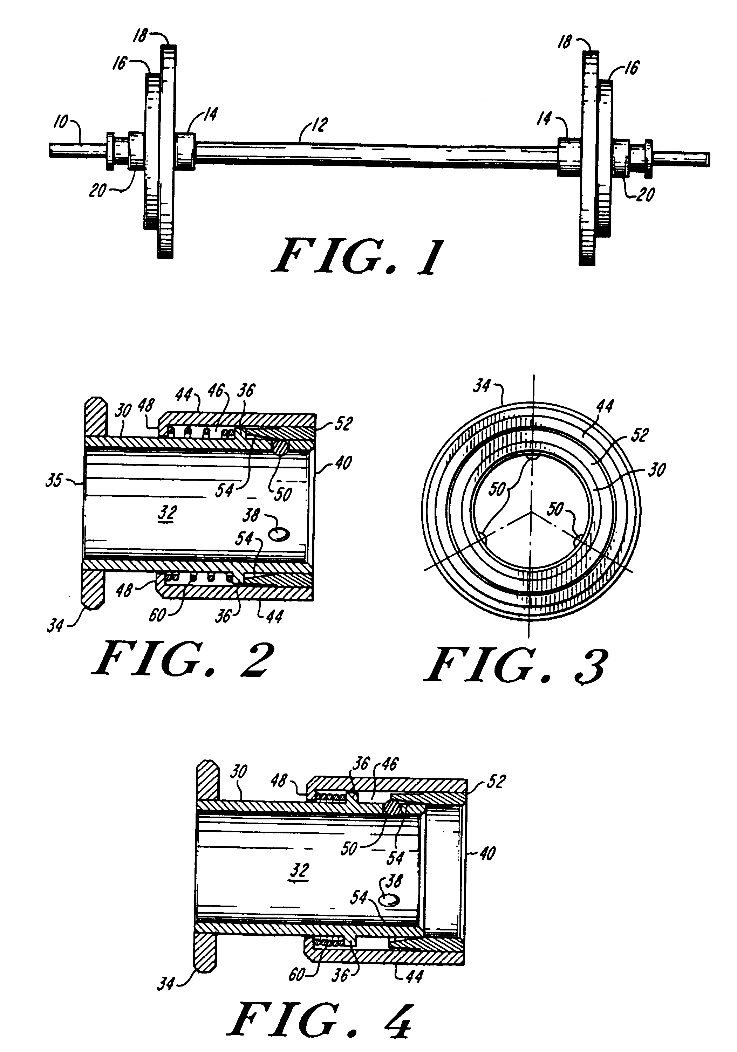

A weight lifting barbell with a quick release collar according to the present invention is shown in FIG. 1. A solid bar 10 of circular cross-section and of a metal such as steel, passes through a knurled sleeve 12 which rotates freely about the bar 10. The knurled sleeve 12 is fixed against lateral displacement in the center of bar 10 by stops 14 which can be bushings permanently attached to the bar 10 by any convenient means. Disc-shaped weight plates 16 and 18 each have a central hole for passage of the bar 10. Weight plates 16 and 18 of equal weight are slipped onto opposite ends of the bar 10 into abutment with the fixed stops. Then, a quick release collar 20, in accordance with the present invention, is installed on each end of the bar 10 in close-fitting abutment with each weight plate 16. The weight plates 16 and 18 are securely held in position during use by the collars 20. When it is desired to change or remove the weight plates 16 and 18, each quick release collar 20 is manually grasped and unlocked as described below and is slipped off bar 10 with one hand.

The quick release collar 20 of the present invention is shown in the locked position in FIG. 2. A collar body 30 includes a generally cylindrical shell with a central opening 32 sized to permit passage of the bar 10. An annular grip ring 34 is provided at a first (or outboard) end 35 of the collar body 30 to facilitate manual release of the collar. Axially spaced from the grip ring 34 along the collar body 30 is an outwardly extending circumferential flange 36 around the outside periphery of the cylindrical shell. The collar body 30 is also provided with three (this number could vary) radial openings 38 which pass through the cylindrical shell between the flange 36 and a second (or inboard) end 40 of the collar body 30. In use, the inboard end 40 of the collar body 30 faces toward and abuts against the weight plates 16.

A collar sleeve 44 coaxial with and outside the collar body 30 defines a space 46 between the collar sleeve 44 and the collar body 30. The collar sleeve 44 includes an annular flange 48 extending inwardly to the collar body 30 between the grip ring 34 and the collar body flange 36.

Positioned in each of the radial openings 38 in collar body 30 is a spherical metal ball 50. The radial openings 38 are tapered or otherwise shaped to permit each of the balls 50 to move radially within and to extend partially beyond the openings 38 but not to escape completely from the openings 38.

A tension ring 52 is immovably fixed to the collar sleeve 44 in the space 46 between the collar sleeve 44 and the collar body 30 adjacent to the inboard end 40 of the collar sleeve 44. The tension ring 52 has a generally cylindrical shape and is typically pressed into the collar sleeve 44 so as to be firmly retained therein. The collar sleeve 44 and the tension ring 52 are axially slidable as a unit with respect to the collar body 30 between the locked position shown in FIG. 2 and the unlocked position shown in FIG. 4. The tension ring 52 includes a tapered or inclined inner surface portion 54 adjacent to the movable balls 50 for controlling the radial outward movement of the balls 50. The surface portion 54 is tapered to provide a relatively small diameter adjacent to the movable balls 50 when the quick release collar 20 normally assumes its locked position, and a relatively large diameter adjacent to the movable balls 50 when the quick release collar is manually caused to assume its unlocked position. Preferably, the surface portion 54 has a truncated conical shape. When the quick release collar 20 is permitted to assume its normal position as shown in FIG. 2, the smaller end of the inner surface portion 54 cams the movable balls 50 radially inward through the openings 38 into contact with the bar 10. When the collar 20 is manually caused to assume its unlocked position as shown in FIG. 4, the balls 50 can move radially outward in openings 38 away from the bar 10. The tapered surface portion 54 accommodates some variations in bar diameter because of the spring-biased camming action of the balls 50 which causes the balls 50 to move radially inward until they engage the bar or until the fully locked position is reached.

The quick release collar 20 is further provided with a coil spring 60 coaxial with the collar body 30 and positioned in the space 46 between the collar body flange 36 and the sleeve flange 48. The spring 60 axially biases the collar sleeve 44 and the tension ring 52 in one direction and axially biases the collar body 30 in the opposite direction. The spring 60 biases the quick release collar towards its locked position in which the tension ring 52 cams the movable balls 50 inwardly through the openings 38 into secure frictional engagement with the bar 10 whereby collar 20 firmly grips the bar 10. In the fully locked position, the outboard end of the tension ring 52 bears against the collar body flange 36, preventing further axial movement of the tension ring 52. However, the diameter of the bar 10 may be so large as to prevent the collar 20 from reaching its fully locked position without any adverse effects on collar operation.

When the quick release collar 20 of the present invention is to be put on the bar 10, collar sleeve 44 is grasped with one hand, and the inboard end 40 of the collar 20 is slipped onto the end of the bar 10. Because the collar 20 is normally in its locked position (shown in FIG. 2), the inwardly protruding balls 50 strike the end of the bar 10. Then, as sleeve 44 is manually moved in the inboard direction, the collar slightly unlocks causing the balls 50 to be pushed radially outward in the openings 38. Collar 20 can then be snugged up against the weight plates by being manually pushed in the inboard direction. The manual one-handed force can be applied to the sleeve 44 or to the grip ring 34. The collar moves easily and smoothly in the inboard direction because balls 50 roll in a direction causing a slight unlocking action of the collar 20. In contrast, any outward force by the weight plate 16 or by manual pressure against the inboard end 40 of the collar sleeve 44 and the tension ring 52 causes the tension ring 52 to cam the balls 50 radially inward into tighter frictional engagement with the bar 10. The tapered inner surface portion 54 provides a force on the balls 50 having both axial and a radial components. The radial component increases the grip of the balls 50 on the bar 10, thereby preventing outward slipping of the collar 20 on the bar 10.

When it is desired to unlock or release the collar of the present invention, it is necessary only to grasp the collar 20 and spread the grip ring 34 and the collar sleeve 44 apart in opposite directions with the thumb and one or two fingers. A small amount of spreading pressure releases the balls 50 from gripping contact with the bar 10. Then, so long as the spreading pressure is maintained, the collar 20 can be slipped off the end of the bar 10 for changing the weight plates. Unless the bar has a very large diameter, it is not necessary to compress the spring 60 all the way to the fully unlocked position as shown in FIG. 4 in order to release the frictional engagement between the bar 10 and the balls 50. A relatively small axial displacement between the collar body 30 and the collar sleeve 44 is usually sufficient. To make the manual operation of the collar more comfortable, it is desirable to remove shape edges from the grip ring 34 and the collar sleeve 44 by beveling or rounding.

The grip ring 34 has been disclosed above as an annular ring at the end of the collar body 30. Typically, the grip ring 34 is pressed onto the collar body 30. However, it will be understood that any suitable means for gripping the collar body 30 is included within the scope of the present invention. For example, the collar body 30 may be provided with raised ridges to provide a grip. Furthermore, the grip means is not necessarily located at the outboard end of the collar body 30.

The elements of the collar are typically fabricated from a metal such as steel. However, it will be understood that the collar can be fabricated from plastic or other suitable materials without departing from the scope of the present invention.

The quick release collar of the present invention is easily and manually removable without tools and without having to be rotated around the bar. In addition, the collar of the present invention is compatible with any bar or shaft of circular cross-section and does not require grooves or other modifications on the bar or shaft.

## Claims

1. A quick release collar (20) adapted to be axially received on and to be removably fixed at any selected location along the length of a rigid cylindrical bar (10) or the like, comprising:

a collar body (30) having an axially extending cylindrical passage (32) extending therethrough for receiving said bar (10), a radially outwardly extending first flange (36) on the outer surface of said collar body (30), and a plurality of radial openings (38) in said collar body (30);

radially movable balls (50) located within the openings (38) in said collar body (30);

a sleeve (44) surrounding said collar body (30) and defining a space therebetween (46), said sleeve (44) including a second flange (48) extending radially inwardly toward said collar body (30) at a location spaced axially from said first flange (36);

a tension ring (52) integrally associated with said collar body (30) and located in the space (46) between said sleeve (44) and said collar body (30), said sleeve (44) and said tension ring (52) being axially slidable as a unit with respect to said collar body (30) between a locked position and an unlocked position, said tension ring (52) having a tapered inner surface (54) with a relatively small diameter portion which urges said movable balls (50) radially inwardly into said passage (32) in the locked position, and with a relatively large diameter portion accommodating radial movement of said movable balls (50) out of said passage (32) in the unlocked position; and

biasing means (60) positioned in said space (46) between said first (36) and second (48) flanges for normally biasing said sleeve (44) and said tension ring (52) axially with respect to said collar body (30) toward the locked position characterized by said tapered inner surface (54) being located on an end portion of said tension ring (52) which end portion is spaced radially inwardly from said sleeve (44).

2. A quick release collar (20) as defined in claim 1 further comprising grip means (34) on the outer surface of said collar body (30), said grip means (34) and said second flange (48) being axially separable to compress said biasing means (60) while moving said tension ring (52) axially toward the unlocked position.

3. The quick release collar (20) as defined in claim 1 wherein said biasing means (60) comprises a coiled spring (60) surrounding said collar body (30).

4. A quick release collar (20) as defined in claim 2 wherein said grip means (34) comprises an annular ring positioned at one end (35) of said collar body (30) and extending radially outward therefrom.

5. A quick release collar (20) as defined in claim 1 wherein said tapered inner surface (54) has a truncated conical shape.

6. A quick release collar (20) as defined in claim 1 including three radially movable balls (50) equiangularly spaced about the axis of said passage (32).

7. A quick release collar (20) as defined in claim 1 wherein said tension ring (52) is secured within said sleeve (44) by press fitting.

8. A quick release collar (20) as defined in claim 1 wherein said collar body (30) and said sleeve (44) are each generally cylindrical in shape.

9. A quick release collar (20) as defined in claim 1 wherein said second flange (48) and said tension ring (52) are positioned adjacent to opposite ends of said sleeve (44).

10. A quick release collar (20) as defined in claim 1 wherein said tension ring (52) bears against said first flange (36) in the locked position.

11. A quick release collar (20) as defined in claim 1 wherein said inner surface (54) is tapered from a smaller diameter closest to an inboard end of said quick release collar (20) to a larger diameter closest to an outboard end of said quick release collar (20) so that said balls (50) are cammed tightly into contact with a bar (10) in said passage (32) when an axial force is applied against the inboard end of said quick release collar (20), and said quick release collar (20) slips relatively freely along said bar (10) under the influence of an axial force applied to said collar in a direction toward the outboard end thereof.

12. A quick release collar (20) defined in claim 2 wherein said grip means (34) and said sleeve (44) are sized and arranged to facilitate manual spreading thereof with one hand in order to easily and non-rotatably slide said quick release collar (20) along a bar (10) received in said passage (32).

**Revendications**

1. Manchon d'arrêt rapide (20), adapté pour être placé axialement sur une barre cylindrique (10) rigide ou analogue et être fixé de façon amovible, en tout emplacement longitudinal sélectionné comprenant :

- un corps de collier (30) traversé par un passage cylindrique axial (32), pour recevoir ladite barre (10), une première bride (36), qui s'étend radialement vers l'extérieur, sur la surface extérieure dudit corps de collier (30), et une pluralité d'ouvertures radiales (38) disposées dans ledit corps de collier (30) ;
- des billes (50), déplaçables radialement, situées à l'intérieur des ouvertures (38) ménagées dans ledit corps de collier (30) ;
- une douille (44), qui entoure ledit corps de collier (30) et définit un espace vis-à-vis de lui, ladite douille comprenant une seconde bride (48) qui s'étend radialement vers l'intérieur, en direction dudit corps de collier (30), en un emplacement espacé axialement de ladite première bride (36) ;
- une bague de tension (52), associée d'un seul tenant audit corps de collier (30) et situé dans l'espace (46) existant entre ladite douille (44) et ledit corps de collier (30), ladite douille (44) et ladite bague de tension (52) étant susceptibles de coulisser axialement d'un seul bloc par rapport audit corps de collier (30), entre une position verrouillée et une position non verrouillée, ladite bague de tension (50) comportant une surface intérieure conique (54) avec une partie de diamètre relativement petit qui pousse lesdites billes (50) déplaçables radialement vers l'intérieur, dans ledit passage (38), dans la position verrouillée, et avec une partie de diamètre relativement grand qui permet un mouvement radial desdites billes (50) déplaçables, hors dudit passage (38), dans la position non verrouillée ; et
- des moyens de poussée (60), positionnés dans ledit espace (46) existant entre lesdites première (36) et seconde (48) brides, pour normalement pousser ladite douille (44) et ladite bague de tension (52) axialement par rapport audit corps de collier (30), vers la position verrouillée, caractérisé par le fait que ladite surface inférieure conique (54) est située sur une partie d'extrémité de ladite bague de tension (52), dont la partie d'extrémité est espacée radialement vers l'intérieur de ladite douille (44).

2. Manchon d'arrêt rapide (20) selon la revendication 1, comprenant en outre un moyen de prise (34) sur la surface extérieure dudit corps de collier (30), ledit moyen de prise (34) et ladite seconde bride (48) étant séparables axialement, pour comprimer ledit moyen de poussée (60) tout en déplaçant ladite bague de tension (52) axialement vers la position non verrouillée.

3. Manchon d'arrêt rapide (20) selon la revendication 1, dans lequel ledit moyen de poussée (60) comprend un ressort hélicoïdal (60) entourant ledit corps de collier (30).

4. Manchon d'arrêt rapide (20) selon la revendication 2, dans lequel ledit moyen de prise (34) comprend une bague annulaire positionnée à une extrémité (35) dudit corps de collier (30) et s'étendant radialement à l'extérieur de ce dernier.

5. Manchon d'arrêt rapide (20) selon la revendication 1, dans lequel ladite surface intérieure conique (54) présente une forme tronconique.

6. Manchon d'arrêt rapide (20) selon la revendication 1, comprenant trois billes (50) déplaçables radialement espacées équiangulairement autour de l'axe dudit passage (32).

7. Manchon d'arrêt rapide (20) selon la revendication 1, dans lequel ladite bague de tension (52) est fixée à l'intérieur de ladite douille (44) par un montage à la presse.

8. Manchon d'arrêt rapide (20) selon la revendication 1, dans lequel ledit corps de collier (30) et ladite douille (44) sont chacun de forme généralement cylindrique.

9. Manchon d'arrêt rapide (20) selon la revendication 1, dans lequel ladite seconde bride (48) et ladite bague de tension (52) sont positionnées ajacentes aux extrémités opposées de ladite douille (44).

10. Manchon d'arrêt rapide (20) selon la revendication 1, dans lequel ladite bague de tension (52) s'apppuie contre ladite première bride (36) dans la position verrouillée.

11. Manchon d'arrêt rapide (20) selon la revendication 1, dans lequel ladite surface intérieure (54) est effilée coniquement, depuis un petit diamètre, à proximité d'une extrémité d'entrée dudit manchon d'arrêt rapide (20) jusqu'à un grand diamètre, près d'une extrémité de sortie dudit manchon d'arrêt rapide (20), de manière que lesdites billes (50) soient soulevées en contact serré avec une barre (12) passant dans ledit passage (32), lorsqu'une force axiale est appliquée contre l'extrémité d'entrée dudit manchon d'arrêt rapide (20), et ledit manchon d'arrêt rapide (20) coulissant relativement librement le long de ladite barre (12) sous l'influence d'une force axiale appliquée audit collier, en direction de son bord de sortie.

12. Manchon d'arrêt rapide (20) selon la revendication 2, dans lequel ledit moyen de prise (34) et ladite douille (44) sont dimensionnés et disposés pour faciliter leur écartement manuel, d'une seule main, de façon à faire coulisser facilement et sans le faire tourner ledit manchon d'arrêt rapide (20) le long d'une barre (10) logée dans ledit passage (32).

**Patentansprüche**

1. Eine Schnellverschlußmuffe (20), welche axial aufsteckbar und lösbar befestigt an jeder ausgewählten Stelle entlang der Längsausdehnung einer steifen zylindrischen Stange (10) oder dergleichen ausgebildet ist, mit:
einem Muffenkörper (30) mit einem sich in axialer Richtung erstreckenden zylindrischen Durchlaß (32) zur Aufnahme der Stange (10), mit einem radial nach außen abstehenden ersten Flansch (36) auf der Außenfläche des Muffenkörpers (30) und mit einer Vielzahl von radialen Öffnungen (38) im Muffenkörper (30);
innerhalb der Öffnungen (38) in dem Muffenkörper (30) radial beweglich angeordneten Kugeln (50);
einer den Muffenkörper (30) umgebenden und mit diesem einen Zwischenraum (46) einschließende Hülse (44), wobei die Hülse (44) einen zweiten, radial nach innen in Richtung des Muffenkörpers (30) abstehenden Flansch (48) axial beabstandet vom ersten Flansch (36) aufweist;
einem einteilig dem Muffenkörper (30) zugeordneten und in dem Zwischenraum (46) zwischen der Hülse (44) und dem Muffenkörper (30) angeordneten Spannring (52), wobei die Hülse (44) und der Spannring (52) als Einheit relativ zum Muffenkörper (30) zwischen einer verriegelten und einer entriegelten Stellung axial verschiebbar sind, der Spannring (52) zur Bewegung der Kugeln (50) radial nach innen in den Durchlaß (32) in der verriegelten Stellung eine schräg zulaufende innere Oberfläche (54) mit einem Abschnitt von relativ kleinem Durchmesser aufweist und mit einem Abschnitt mit relativ großem Durchmesser, der in der entriegelten Stellung eine radiale Bewegung der beweglichen Kugeln (50) aus dem Durchlaß (32) ermöglicht; und

einer in dem Zwischenraum (46) zwischen dem ersten (36) und zweiten (48) Flansch angeordneten Vorspanneinrichtung (60) zur Vorspannung von Hülse (44) und Spannring (52) axial zum Muffenkörper (30) in Richtung der verriegelten Stellung,
**dadurch gekennzeichnet,**
daß die schräg verlaufende innere Oberfläche (54) in einem Endabschnitt des Spannrings (52) angeordnet ist, wobei der Endabschnitt mit Abstand radial nach innen versetzt zur Hülse (44) angeordnet ist.

2. Schnellverschlußmuffe (20) nach Anspruch 1,
**gekennzeichnet durch**
eine zusätzliche Greifeinrichtung (34) an der äußeren Oberfläche des Muffenkörpers (30), wobei die Greifeinrichtung (34) und der zweite Flansch (48) axial voneinander trennbar sind, wodurch bei Bewegung des Spannrings (52) axial in Richtung der entriegelten Stellung die Vorspanneinrichtung (60) zusammendrückbar ist.

3. Schnellverschlußmuffe nach Anspruch 1,
**dadurch gekennzeichnet,**
daß die Vorspanneinrichtung (60) eine den Muffenkörper (30) umgebende Schraubenfeder (60) umfaßt.

4. Schnellverschlußmuffe (20) nach Anspruch 2,
**dadurch gekennzeichnet,**
daß die Greifeinrichtung (34) als an einem Ende (35) des Muffenkörpers (30) angeordneter und radial nach außen gerichteter Ring ausgebildet ist.

5. Schnellverschlußmuffe (20) nach Anspruch 1,
**dadurch gekennzeichnet,**
daß die schräg verlaufende innere Oberfläche (54) kegelstumpfförmig ist.

6. Schnellverschlußmuffe (20) nach Anspruch 1,
**dadurch gekennzeichnet,**
daß drei radialbewegliche Kugeln (50) im gleichwinkligen Abstand um die Achse des Durchlasses (32) angeordnet sind.

7. Schnellverschlußmuffe (20) nach Anspruch 1,
**dadurch gekennzeichnet,**
daß der Spannring (52) innerhalb der Hülse (44) durch Preßsitz befestigt ist.

8. Schnellverschlußmuffe (20) nach Anspruch 1,
**dadurch gekennzeichnet,**
daß der Muffenkörper (30) und die Hülse (44) von im wesentlichen zylindrischer Form sind.

**9.** Schnellverschlußmuffe (20) nach Anspruch 1,
**dadurch gekennzeichnet,**
daß der zweite Flansch (48) und der Spannring
(52) benachbart zu gegenüberliegenden Enden
der Hülse (44) angeordnet sind.

**10.** Schnellverschlußmuffe (20) nach Anspruch 1,
**dadurch gekennzeichnet,**
daß der Spannring (52) in der verriegelten Stellung an dem ersten Flansch (36) anliegt.

**11.** Schnellverschlußmuffe (20) nach Anspruch 1,
**dadurch gekennzeichnet,**
daß die innere Oberfläche (54) sich von einem
kleineren Durchmesser nächst einem inneren
Ende der Schnellverschlußmuffe (20) auf einen
größeren Durchmesser nächst einem äußeren
Ende der Schnellverschlußmuffe (20) verjüngt,
wobei die Kugeln (50) in engen Kontakt mit der
Stange (10) im Durchlaß (32) drückbar sind,
wenn eine Axialkraft am inneren Ende der
Schnellverschlußmuffe (20) angelegt ist, und
wobei die Schnellverschlußmuffe (20) relativ
frei entlang der Stange (10) unter Einwirkung
einer Axialkraft verschieblich ist, welche an die
Muffe in Richtung zu deren äußeren Ende angelegt ist.

**12.** Schnellverschlußmuffe (20) nach Anspruch 2,
**dadurch gekennzeichnet,**
daß die Greifeinrichtung (34) und die Hülse
(44) so bemessen und angeordnet sind, daß
ein manuelles Spreizen von diesen mit einer
Hand ermöglicht ist, um einfach und ohne Verdrehung die Schnellverschlußmuffe (20) entlang einer in dem Durchlaß (32) angeordneten
Stange (10) zu verschieben.

FIG. 1

FIG. 2

FIG. 3

FIG. 4